# EUROPEAN PATENT APPLICATION

(11) **EP 2 600 631 A1**
(43) Date of publication of application: **05.06.2013**
(21) Application number: 12275108.4
(22) Date of filing: 17.07.2012
(51) Int. Cl.: H04N 21/462, H04N 21/4782, H04N 21/431, H04N 21/422, H04N 21/4786, H04N 21/41

(54) **Internet television**

(30) Priority: 01.12.2011 US 201113373815
(71) Applicant: Ramdeo, Pradeep, Bronx, New York 10472 (US)
(72) Inventor: Ramdeo, Pradeep, Bronx, New York 10472 (US)
(74) Representative: Wilson Gunn

(57) **Abstract**

A television system for accessing the internet through a television is provided. The television has a display screen. The television system comprises a wireless internet receiver and/or transmitter mounted within the television wherein the internet receiver and transmitter allow a user to access the internet through.

## Description

### BACKGROUND OF THE INVENTION

### 1. Field of the Invention

This invention relates generally to an internet television system and, more particularly, the invention relates to an internet television system which equips a television, such as a high-end, contemporary large flat screen television for example, with plasma, LCD (Liquid Crystal Display) or the like screen, and/or latest screen technology, with a wireless WIFI and/or other receiver and/or transmitter, a wireless keyboard with a mouse, and other components, functions, features of a high-end PC.

### 2. Description of the Prior Art

Combining aspects of two technologies common to virtually all American homes is important. Especially, it would be desirable to combine the television and the Internet-capable computer. Considered separately, both television and the personal computer have revolutionized lives and refinements in these technologies such as large, flat screen televisions and wireless Internet continue to do so.

### SUMMARY

The present invention is a television system for accessing the internet through a television. The television has a display screen. The television system comprises a wireless internet receiver and/or transmitter mounted within the television wherein the internet receiver and transmitter allow a user to access the internet through the television.

In addition, the present invention includes a television system for accessing the internet through a television. The television has a display screen. The television system comprises a wireless internet receiver and/or transmitter mounted within the television and software for an internet browser and an e-mail program. The internet receiver and transmitter allow a user to access the internet through the television. The internet may be displayed on a portion of the display screen of the television with a television program being displayed on another portion of the display screen. The television system may comprise a computer, and may comprise a motherboard. The computer and/or mother board may comprise a processor (CPU) and/or a multiprocessor for multiprocessing, and an operating system. memory (RAM), peripherals and other devices, graphics card, a camera or camera. Microphone and capable of multitasking, networking and the likes.

The present invention further includes a method for accessing the internet through a television. The television has a display screen. The method comprises mounting a wireless internet receiver and/or transmitter within the television and accessing the internet through the television.

### BRIEF DESCRIPTION OF THE DRAWINGS

FIG. 1 is a perspective view illustrating an internet television system, constructed in accordance with the present invention; and
FIG. 2 is another view of an internet television system, constructed in accordance with the present invention, in use.

### DETAILED DESCRIPTION OF THE PREFERRED EMBODIMENTS

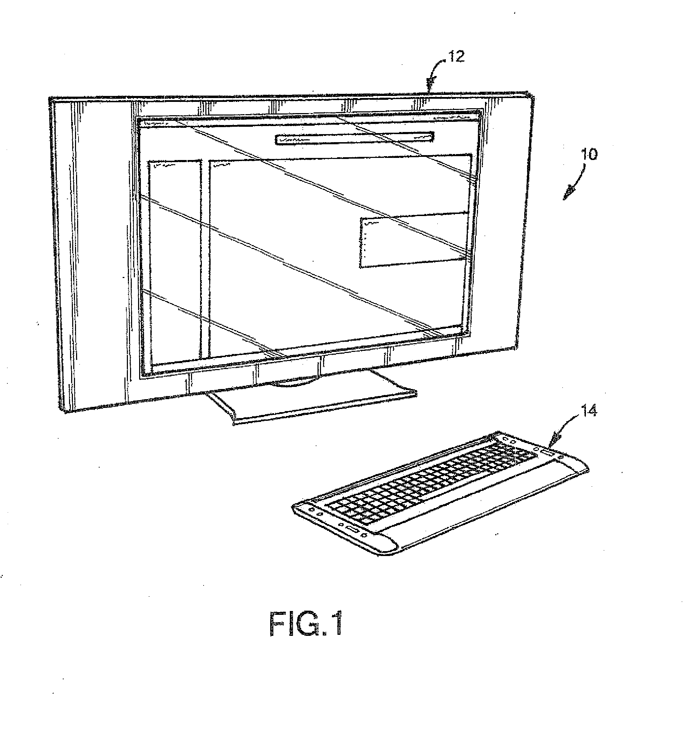

As illustrated in FIG. 1, the present invention is an internet television system, indicated generally at 10, for equipping a high-end various size contemporary large flat screen television 12, with plasma LCD (Liquid Crystal Display) screen, or the latest screen technology, with a wireless Internet receiver and/or transmitter, a wireless keyboard 14, and the other components, functions, and features of a high-end computer such as processor, operating system, memory and the like. Enclosed herewith are four (4) sheets of Exhibit A hereby herein incorporated by reference.

The internet television system 10 of the present invention equips a premium-quality flat screen television 12 with a wireless Internet receiver and/or transmitter that may function like a wireless router as well as a wireless keyboard 14, and the software for an Internet browser, e-mail program, and other desired softwares or applications services or functions. The internet television system 10 expands the television's functions to include that of a large, high-definition computer monitor. Various models can have various sizes, components, and features. The internet television system 10 can be equipped to work in conjunction with a wireless Internet router and/or with Wi-Fi networks, cellular/satellite internet or other types of internet. Screen options on the television 12 enable the user to view television 12 and video at full-screen, to view the Internet (and downloaded content from the Internet) at full-screen; and split-window or multiple windows at the same time functions allow viewers to enjoy television and Internet windows simultaneously. The internet television system 10 will have wireless compatibility with other household wireless devices such as smart-phones and PDAs, a personal computer, printers, and so forth, so that content can be shared or downloaded to or from these devices to the internet television 12. Further, multiple internet television systems 10 installed in the home can link wirelessly with one another, as multiple laptops can share the same wireless router signal,

Various models of the internet television system 10 of the present invention may also be equipped with its own CD/DVD burner to download and copy discs from either the television or the Internet. Some internet television systems 10 may also include a built-in modem and an SD (Secure Data) card slot and/or USB or other ports to accommodate data downloaded or file transfer to or from a computer to the television 12. Given the compact size of contemporary laptops, tablets, and netbooks, it is within the capabilities of existing technology to incorporate a fully or partial components and features of the computer into the internet television system 10, thus producing a truly and uniquely all-in-one system.

The internet television system 10 of the present invention, a home-entertainment, information, and communications system combining a large flat screen, plasma, LCD, or other television 12 with wireless Internet capability, presents users with tremendous convenience and versatility. The internet television system 10, by combining the functions of television and Internet browser, enables users to watch a movie on one window, for example, and use the Internet to identify the stars, location, and read the movie's reviews on another. Users can use their internet television system 10 to download video, watch television, listen to internet radio, and other programming from the Internet, and with the click of a mouse or a stroke or two on the wireless keyboard 14, immediately be enjoying that content on a big, flat screen, high-definition television 12. Further, because the internet television system 10 has been designed to communicate wirelessly with a variety of other wireless devices, and with other internet television systems 10 in the house, the internet television system 10 is far more than an appliance; it is a system 10 of multi-modal wireless communications. Equally useful to those who enjoy television, movies, video games, and other offerings associated with television, and those who prefer the on-line world of the Internet, the internet television system 10 meets all the electronic entertainment/information needs of the contemporary household in a single device.

Various models of the internet television system 10 of the present invention can also be made for commercial use as display boards and can be used in hotels, hospitals, restaurants, airports, or other public places, both inside and outside. Some models of the internet television system 10 can also be made to be controlled by voice using voice applications. For example, some models of the internet television system 10 may have a personal assistant that the user can communicate with.

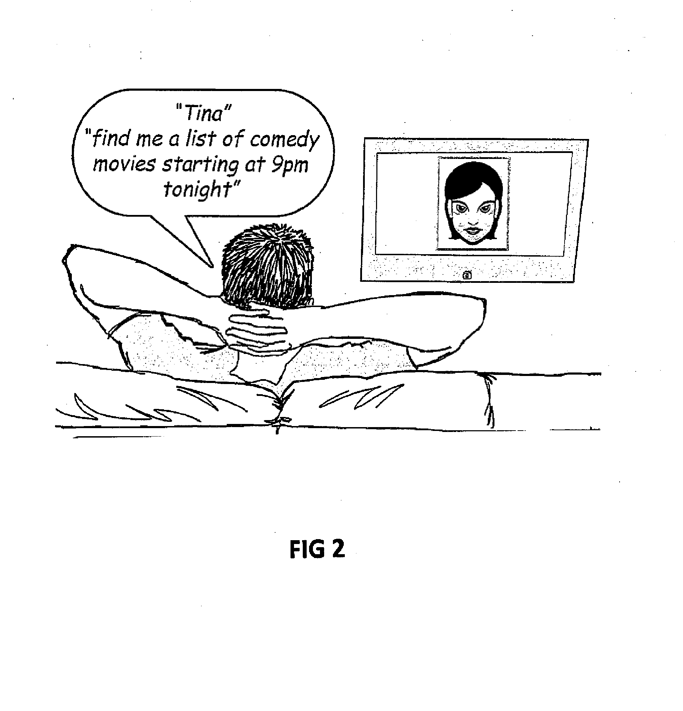

Fig. 2 basically shows how the voice recognition in the TV can be used, in Fig. 2 the user is communicating with the TV by asking the avatar on the TV to find a list of comedy moves starting at 9PM. The avatar will in response find a list of comedy moves starting at that time. The image on the TV is of the avatar. It may be male or female and have a name, accent and image of the user choice (for example a Chinese person may choose a Chinese name for their avatar on their TV and an American may choose an American name).

The user may ask the Avatar any questions, such as "how is the weather?" in which case the Avatar will fetch the weather forecast. The user may also use the avatar to look up facts, find movies, music, video games, locate restaurants, banks, public places, shop online, and the likes, the list can go on and on, the possibilities are endless.

The foregoing exemplary descriptions and the illustrative preferred embodiments of the present invention have been explained in the drawings and described in detail, with varying modifications and alternative embodiments being taught. While the invention has been so shown, described and illustrated, it should be understood by those skilled in the art that equivalent changes in form and detail may be made therein without departing from the true spirit and scope of the invention, and that the scope of the present invention is to be limited only to the claims except as precluded by the prior art. Moreover, the invention as disclosed herein may be suitably practiced in the absence of the specific elements which are disclosed herein.

### Describe the purpose of the idea/invention by explaining who would use it and how:

The purpose of Net Tv is to create a great product by combine the best features, components of 2 products into 1 and taking home entertainment to another level. further more evolving the tv and to create a product that would accommodate the growth and popularity of the internet as it shifts and evolves from information highway to entertainment highway, over the years the internet has grown and continues to grow and become more popular, more people are spending time watching movies/videos on the internet than ever before, so much to a point it has caused concerns among cable, satellite and other entertainment networks, this is also proof that the internet is growing as an entertainment highway and net tv would accommodate that, no longer would the tv be limited to viewing just cable tv, satellite tv, dvd, and etc. by merging features, components of the Tv and the Computer into one product would present users with tremendous convenience and versatility, definitely make Net Tv a true Smart Tv, combining aspects of two technologies common in virtually all American homes is important, especially, it would be desirable to combine the television and the internet capable computer, considered separately, both television and the personal computer have revolutionized lives and refinements in these technologies.

Anyone that likes technology and any of the following would love net tv, watch tv, uses a smart phone, a computer, run various types of software/applications, surf the web, do research/online studying, read e-mails, chat or [video chat], play video games, download and watch movies, videos, download and listen to music, print pages from your Tv to your printer, [multi-tasking] and the likes. [Net Tv would be fully compatible with other wireless products/devices and technology] also because of the dramatic reduction in price of the flat screen tv and computer over the years cost for the average net tv should be inexpesive.

### Describe the problem that the idea/invention solves for users and explain why it is necessary:

The problem Net Tv solves is as the internet grows, evolves and becomes an entertainment highway a better product is needed to accommodate that, Net Tv fills the void, things that once could only be done on a computer or smart phone can now be done on your tv, some of the features that may be fou nd in various models is the ability to watch tv/movie/videos, download music, videos, photos, etc. and at the same time surf the web, with split screen or [windows] the user can watch a number of channels at the same time, adjust the size of the internet window or the movie they are watching to focus more on one or the other or both on the same screen, for example, with a large screen version on Net Tv one or more people could be watching two different tv shows, one could be with sound the other with closed caption [able to see the words instead of sound] and another person may be surfing the web or it may be the other way around where you have one person could be watching tv while two other surfs the web [at the same time] using an additional keyboard or smart phone, taking full advantage of the multiple split screens features, further more, because net tv has been designed to communicate wirelessly with a variety of other wireless devices and with other net tv's in the home, the net tv is far more than an appliance, it is a system of multi-modal wireless communications also because net tv is one product instead of two you use less energy when compared to using both a tv and computer.

### Explain in detail what the idea/invention looks like

Net Tv could look like the latest flat screen tv with similar features, various models could have various features, screen sizes, and types of screens, some could be touch screen and/or use touch buttons [non mechanical], slider or wheel type controls] voice recognition software [voice control, a personal assistant and/ or similar type software], or maybe view cable [or other networks] channels without a cable box/satellite box, or have Internet access without the use of an external modem [because some models may have a built in device where its not necessary to have a cable box or other similar devices to view cable channels], ability to run application/software/programs, have a built in web cam, bluetooth or other wireless capabilities, wifi receiver and/or transmitter or other wireless technology with the ability to communicate with other wireless devices, some models may also have drives for discs such as cd's dvd's/ blue ray, ports for example for usb, hdmi, memory cards such as sd/micro sd and etc. a wireless keyboard with mouse could be used to access the internet, write e-mails or control the tv, Net Tv may also be wall mounted [with a wall bracket], placed in the wall [cut out area in the wall] or on a stand or even hung from the ceiling some models may even be design for commercial use, some may be vandal resistant/proof, weather resistant/proof and may be used as display boards and can be used in hotels, hospitals, restaurants, airports, stores or other public places, [even outside] the comercial version if it has a camera could also perform as a display board and a security system where all the net tv cameras is linked to one main unit orthrough the internet and viewed multiple ways like a gallery, slideshow, etc. similar to other security dvr systems.

### What are the approximate dimensions (if applicable)?

| | |
|---|---|
| **Height** | Various |
| **Length** | Various |
| **Width** | Various |
| **Diameter** | Various |

### Explain in detail how the idea/invention works:

how net tv works is by combining the best and/or various features and components of the tv and the computer into one product you get the best of two into one elegant product, it is far more than just a tv its a home-entertainment, information and communication system.

your Net Tv can now be customized to your own personal needs, [like your smart phone or computer] and has the ability to download and run applications/software of your choice, automatically update itself and communicate with your other devices [smart phones, computers, printers, dvr's and other net tv's] watch tv/movie/videos [from cable], or watch Internet tv/ videos/ movies [putchase/rent movies online like from net flix, blockbuster and watch them 'instantly], stream live Internet tv shows, movies and programs from websites, also listen to Internet radio and other programming from the Internet, download music, videos, photos, send e-mails, etc. and surf the web, play video games, [perfect for multi-taskers], with just the click of a mouse or stroke or two on the wireless keyboard one can immediately be enjoying that content on a large, flat, high-definition, plasma, LCD screen or [the latest screen technology]

The Net Tv is equally useful to those who enjoy tv, movies, video games, and other offerings associated with the television and those who prefer the online world of the Internet, and apps of the computers and smart phones, the Net Tv meets all the electronic entertainment/information needs of the contemporary household in a single device.

by equipping a premium quality flat screen tv with a wireless Internet receiver and/or transmitter [that may function like a wireless router] as well as a wireless keyboard, and Internet browser for using the internet, sending e-mails, etc, popu lar software's/applications, services, functions, features and the processor, operating system, memory and/or other component/features of the computer, the net tv expands the television's functions to include that of a large, high-definition computer monitor. features, components, sizes, colors, softwares and etc. may vary with each model. the net tv can be equipped to work in conjunction with a wireless internet router and/or other connections such as wifi networks, cellular/satellite internet or other types of internet.

screen options for example on the Net Tv may enable the user to view television, video and Internet at full screen, gallary, split/multiple screens, multiple windows or other screen options, then at the same time allow the viewers to enjoy television, video[dvd] and Internet windows simultaneously. for example one could be watching MTV and see a music video, you realy like the song, you can use the Internet in another window or same screen to look up the artist, song or purchase and download the song directly to compatable mp3 player, dvr, cell phone, your net tv or other devices. Movies, videos, music, photos and etc. could be downloaded directly to compatable DVR's [some models Net Tv may have built in DVR], you can also use your net tv to find videos, music, photos and etc. in your dvr. windows sizes could also be adjusted/magnified if needed like in a web browser for example if the user is reading an article or news online and the user needs to enlarge the page or window to see the words and read. most of the common features found in the computer web browser could also be found in net tv browser, users might even be able to install and use the web browser of their choice.

the net tv would have wireless compatibility with other household wireless devices such as smart-phones, PDA's, personal computer, printers, wireless external hard drives, mp3 players, and so forth, so that content can be shared or downloaded To or From these devices to the net tv wirelessly. further more, multiple net tv's installed in the home could link wirelessly with one another, as multiple laptops/computers can share the same wireless router singal. various models of net tv can also be equipped with its own cd/dvd player/burner to play or copy discs or information from either the internet to net tv. some may include a built-in wireless modem and ports such as sd [secure data] card port , hdmi, use and/or other ports and jacks to accommodate file transfer/download to or from net tv to other devices if necessary. some models may have very few or no ports or buttons and may be completely/mostly or partially wireless.

an example of how net tv with a dvd player could work is maybe in a hair salon/barber shop or even an airplane there could be one net tv with a dvd player and this net tv would play it wirelessly on all the other net tv's so all net tv's are playing the same movie from one source, it may also work the same with compatable smartphones cable/satellite,dvr devices and the likes. [each net tv of this mode! may receive and/or transmit signals]

some models may also work with voice recognition/ voice command and/or similar type software, where the user can communicate and control the net tv with their voice, like a [personal assistant] for example it may be to adjust tv settings, search something online, locate the nearest restaurant of your choice, find out about the weather, movies, check your email, make a phone or video call or send a text message, just using your voice and the likes.

given the compact size of contemporary laptops, net books and etc. it is within the capabilities of existing technology to incorporate a fully or partial components of the computer into the net tv, thus producing a truly and uniquely all-in-one system. A true smart tv.

it is also worth noting that as technology advances and progresses features, components/parts may be added or removed to improve the Net Tv. features may vary with each model, various models may have more or less features than the other.

## Claims

1. A television system for accessing the internet through a television, the television having a display screen, the television system comprising:
a wireless internet receiver and/or transmitter mounted within the television;
wherein the internet receiver and transmitter allow a user to access the internet through the television.

2. The television system of claim 1 and further comprising:
a wireless keyboard for interacting with the internet receiver and transmitter.

3. The television system of claim 1 and further comprising:
software for an internet browser and an e-mail program.

4. The television system of claim 1 wherein the internet receiver and transmitter operates in conjunction with a wireless Internet router and with Wi-Fi networks, cellular/satellite internet, and other types of Internet.

5. The television system of claim 1 wherein the internet is displayed on the entire display screen of the television.

6. The television system of claim 1 wherein the internet is displayed on only a portion of the display screen of the television, a television program being displayed on another portion of the display screen,

7. The television system of claim 6 wherein the display screen may be split equally in half, either horizontally or vertically, with the internet displayed on one half and the television program being displayed on the other half of the display screen, simultaneously.

8. The television system of claim 1 wherein the internet syncs with smart cellular telephones and PDAs, a personal computer, and printers.

9. The television system of claim 1 and further comprising:
multiple television systems wirelessly interacting with each other.

10. The television system of claim 1 and further comprising:
a CD/DVD burner and/or modem mounted within the television and/or an SD (Secure Data) card slot formed in the television.

11. The television system of claim 1 and further comprising:
at least one data port.

12. The television system of claim 1 and further comprising:
voice control of the internet and television.

13. The television system of claim 1 further comprising a motherboard.

14. The television system of claim 1 further comprising, these and/or other components, functions, features, hardware, software, applications, or the likes associated with a computer comprised in the television system: at least a processor [CPU] and or multiprocessor for multiprocessing, an operating system, memory [RAM], peripherals and or other devices, graphics card, a camera or cameras, microphone, and capable of multitasking, Networking and the likes.

15. A method for accessing the internet through a television, the television having a display screen, the method comprising:
mounting a wireless internet receiver and/or transmitter within the television; and
accessing the internet through the television.
